# EUROPEAN PATENT APPLICATION

(11) **EP 2 204 225 A1**
(43) Date of publication of application: **07.07.2010**
(21) Application number: 08075962.4
(22) Date of filing: 22.12.2008
(51) Int. Cl.: B01D 15/22, G01N 30/60

(54) **Column reactor**

(71) Applicant: SynChro GmbH, 50827 Köln-Ossendorf (DE)
(72) Inventor: Baru, Valery, Moscow, Serpukhov, 142205 (RU); Baru, Michael, Dr., Moscow, Pushchino 142290 (RU); Mikheev, Vadim, Moscow 117454 (RU); Arkavy, Igor, Moscow 105037 (RU)
(74) Representative: Boeckh, Tobias

(57) **Abstract**

The invention refers to a system for the synthesis of biopolymers or performing chromatography using a polymer carrier or sorbent.
The system comprises a glass tube having a cap through which two concentric inner and outer tubes are disposed. A capillary is located within the inner tube, both tubes have a bottom part forming a filter holder, a reaction volume is defined between the filter and the lower part of the glass tube, said reaction volume comprising a resin or sorbent.
The system is characterized in that it provides a weight on the top of the inner tube and/or a means for introducing a pressurized gas into an upper volume of the column so as to control the movement of the piston, thereby minimizing the dead volumes in the column.

## Description

### TECHNICAL FIELD OF THE INVENTION

The invention relates to a system and a method for the synthesis of biopolymers or chromatography using biopolymers and the use of such a system.

### BACKGROUND OF THE INVENTION

Solid-phase peptide synthesis (SPPS), pioneered by Robert Bruce Merrifield is now the accepted method for creating peptides and proteins in the lab in a synthetic manner. SPPS allows the synthesis of natural peptides, the incorporation of unnatural amino acids, peptide/protein backbone modification, and the synthesis of D-proteins, which consist of D-amino acids.

Small solid beads, insoluble yet porous, are treated with functional units ('linkers') on which peptide chains can be built. The peptide will remain covalently attached to the bead until cleaved from it by a reagent such as trifluoroacetic acid. The peptide is thus 'immobilized' on the solid-phase and can be retained during a filtration process, whereas liquid-phase reagents and by-products of synthesis are flushed away.

The physical properties of the solid support, and the applications to which it can be utilized, vary with the material from which the support is constructed, the amount of crosslinking, as well as the linker and handle being used. Polystyrene resins for example are versatile and quite useful in multi-well, automated peptide synthesis, due to their minimal swelling in dichloromethane. Other broadly used resin materials are Polyamide or Polyethylene glycol.

The general principle of SPPS is one of repeated cycles of coupling-deprotection. The free N-terminal amine of a solid-phase attached peptide is coupled to a single N-protected amino acid unit. This unit is then deprotected, revealing a new N-terminal amine to which a further amino acid may be attached.

There are two majorly used forms of SPPS -- Fmoc and Boc. Unlike ribosome protein synthesis, solid-phase peptide synthesis proceeds in a C-terminal to N-terminal fashion. The N-termini of amino acid monomers is protected by these two groups and added onto a deprotected amino acid chain.

Automated synthesizers are available for both techniques, though many research groups continue to perform SPPS manually.

SPPS is limited by yields, and typically peptides and proteins in the range of 70∼100 amino acids are pushing the limits of synthetic accessibility. Synthetic difficulty also is sequence dependent; typically amyloid peptides and proteins are difficult to make. Longer lengths can be accessed by using native chemical ligation to couple two peptides together with quantitative yields.

Another limitation of state-of-the-art peptide synthesizers is the requirement of frequent interruptions of ongoing reaction cycles. Those are necessary for the withdrawal of peptide samples in order to confirm a current reaction step to be completed and to avoid the wasting of reagents like amino acids by immature interruption of peptide synthesis. However, these interruptions are both, time- and cost-consuming since synthesis reactions have to be re-started frequently after withdrawal and analysis of samples via Kaiser's test. Furthermore, the lack of continuous control of the peptide synthesis reactions requires to set the end point of a reaction based on experience rather than on precise synthesis data. As a result, each reaction cycle produces significant amounts of disposable immature, non-desired peptides.

Therefore, the objective technical task of the invention is to provide means for a fastened, automated solid-phase peptide synthesis with a significantly reduced need for reagents like amino acids and reaction solvent.

### SUMMARY OF THE INVENTION

The invention provides a system for the synthesis of biopolymers or performing chromatography using a polymer carrier or sorbent comprising a tube as a reaction column with an outlet fitting at the bottom of the tube that is covered by an outlet filter and a top opening of the glass tube being sealed with a cap through that the stem of a movable divider reaches inside the volume of the glass tube, where the movable divider is build by an outer tube and an inner tube with the inner tube being located in close contact inside the outer tube where the movable divider comprises above the sealing nuts for the inner and outer tube, with nuts that can be screwed against each other and the parts forming the stem of the movable divider being hollow cylinders where inside the stem of the inner tube a capillary is located and both tubes having a bottom part forming a filter holder where the inner tube is barrel-shaped and located inside the outer tube that is formed as a cylinder that is open to the bottom and where a sealing is placed at the bottom of both tubes that is in contact with the inner wall of the glass tube dividing the volume of the glass tube in an upper volume and a reaction volume containing a resin or sorbent and an inlet filter that is placed between the lower end of the capillary and the reaction volume where an external weight is connected with the top of the inner tube and/or a gas is pressed through a gas inlet that is connected by a gas distribution valve with the top sealing cap and means for measuring and controlling gas pressure.

According to the invention a cylindrical form for the tube is preferred. The tube is preferentially made of glass, metal or plastic. But, the invention is not limited to these material; any other material with similar properties is within the scope of the invention and also preferred.

In a further embodiment of the invention the sealing between the glass tube and filter holder is made of Teflon ® or any other flexible material with chemical resistance against the used material.

In the embodiment where an external weight is used it is intended that the external weight is adjustable. Alternatively gas pressure can be used to reduce the volume between upper filter and sorbent or polymer. In this case the volume above the platinum wire of the glass tube is minimized by a protuberance of the outer tube with a ring sealing between inner wall of the glass tube and protuberance.

It is further intended that the volume between filter holder and pressure volume is connected via a safety tube through the sealing cap with the atmosphere.

In a preferred embodiment of the invention is a leakage detection system located in the volume directly above the filter holder. The leakage detection system can comprise a detector placed on top of the filter holder of the movable divider that are connected via means for detecting a change in capacitance or resistance characteristics of the medium.

Additionally a resin sample can be attached to a system according to the invention. The resin sampler may consist of a movable piston with a groove that has one positions where the groove is inside the reaction volume an a second position where the groove is outside the reaction volume and between two capillaries filled with a washing reagent and being connected to a sample obtainer, so that samples can be easily washed inside and used directly for testing. Due to this method the sample can be washed inside the sample obtainer in an easy manner obtainable for further Kaiser's test without any other preparations.

According to the invention means are to the reaction column attached for monitoring the position of the movable divider.

The invention relates further to the use of system according to the invention for the synthesis of biopolymers, for cleaning biological, chemical or medical probes.

Finally the invention relates to a method for monitoring swellographic changes using a system according to one of the claims 1 to 11.

In the following we would like to give some more specific definitions of terms used within the context of the present invention:

In connection with the present invention the term "reaction" is not only used in connection with the synthesis of polymers or bio-polymers, but also in relation to chromatographic processes in biological, chemical and medical applications. Furthermore this term is used in connection with the production of biological active substances or molecules.

### DETAILED DESCRITION OF THE INVENTION

The invention refers to a single aspect of an automatic peptide synthesizer, in particular a continuous-flow reactor with a moving piston, a piston position pickup unit and a resin sampler.

According to the invention, the peptide synthesis is actually performed within the continuous-flow reactor. Besides a titanium frame, the reactor consists of a coated glass tube and a so-called moving piston. The latter is completed by a Teflon sealing in order to close the reaction chamber and to avoid the leaking of reaction fluids. It is charged by a weight while this external force ensures a constant and immediate contact between piston and the surface of the resin (polymer). According to the invention, the moving piston allows the minimization of dead volume thereby reducing cost-consuming use of reagents and solvent.

The piston position pickup continuously measures the changes of the piston's position resulting from volume changes of the reacting fluid due to swelling/shrinking effects between solvent and resin molecules. Since a completed reaction is characterized by a stable volume of the reaction liquid, these data provide information about the time point a reaction cycle is finished. Reaction liquid volume is processed by a software being part of the invention.

Optionally, the continuous-flow reactor can be equipped with a resin sampler which allows the withdrawal of peptide samples during an ongoing reaction cycle without interrupting it. This option includes one great advantage over state-of-the art reactors as it allows the extraction of peptides at every maturational stage (i.e. after addition of every amino acid) which are defined fragments of the full length peptide.

Together with the data collected by the piston position pickup unit, the resin sampler provides an effective means to
- analyze the progress of an ongoing reaction cycle
- make time- and cost-consuming interruptions of reaction cycles dispensable
- substitute the Kaiser's test as a means to analyze the completeness of a reaction status during the process.

Alternatively, according to the invention the resin sampler can be replaced by a chromatography unit. This is especially useful for applicants who do not have to meet GMP requirements with their peptide synthesis (since GMP norms predict the performance of a Kaiser's test with synthesized peptide samples) but nevertheless are interested in a continuous control of the ongoing synthesis. Chromatography modification of the reactor can be used also for purifying target peptides and any other chemicals. It might be particularly successfully used for gel-chromatography on soft sorbents like Sephadex serises due to the moving piston which doesn't damage at all soft sorbent, and so the purification process is performed with high efficiency.

### DESCRIPTION OF THE FIGURES

- **Fig. 1**: shows the reactor working with external weights
- **Fig. 2**: shows the reactor working with gas pressure
- **Fig. 3**: shows the detection system
- **Fig. 4a,b and c**: shows the resin sampler with sample obtainer

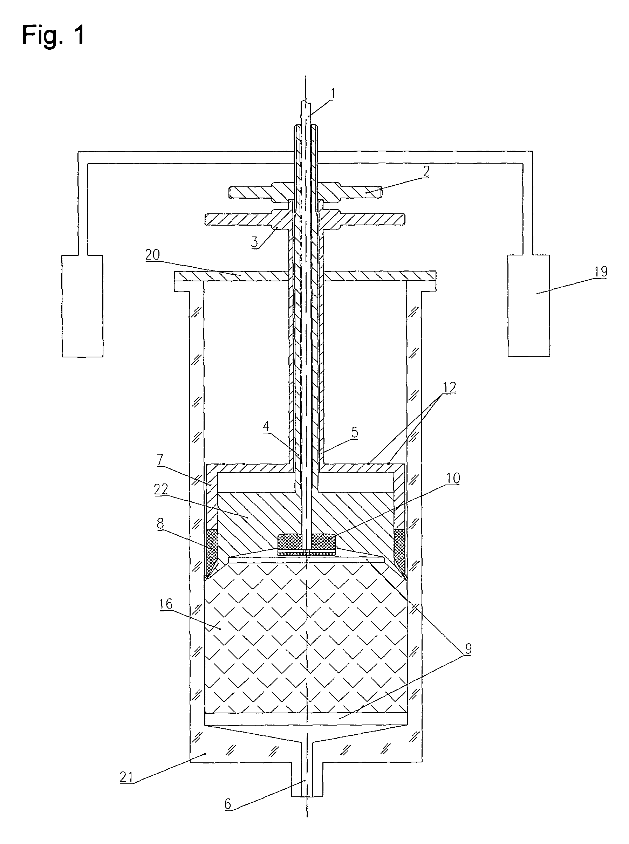

Figure 1 shows a reactor according to the invention working with an external weight 19. The column is performed as a glass tube 21 with top and bottom filter 9 between a polymer 16 or sorbent is positioned. Top filter 9 is situated inside the inner tube 4 with a filter holder 22 in the end. There is also an outer tube 5 with a nut 3 for outer tube on the top and so-called movable divider 7. A distribution plug 10 performs flow distribution which is important for chromatography for better purification. There is a Teflon sealing 8 between the filter holder 22 and glass tube 21.

To seal the assembled system nut 2 is clockwise screwed by holding the nut 3 at the same time. In this case the movable divider 7 will start to press on the Teflon sealing and it'll start to press to the glass chamber 21 by a thin sealing line. There is also an external weight 19 that applies definite pressure on the movable divider 7.

On top of the outer tube 5 a platinum wire 12 is located that can be used for monitoring leakage of the system. Inside the inner tube 4 a capillary 1 is situated and at the bottom of the glass tube 21 is an outlet fitting 6 mounted.

The great advantage over sealing systems of the state of the art is that it is not necessary to use excess of the force which will definitely occur when using a spring or rubber sealing. And the advantage of not using excess of force leads to much better results when performing swellographic monitoring. Besides this it is advantageous for the resin that will not be damaged because smaller force is needed to move the piston. It is preferred to use calibrated glass for a column according to the invention.

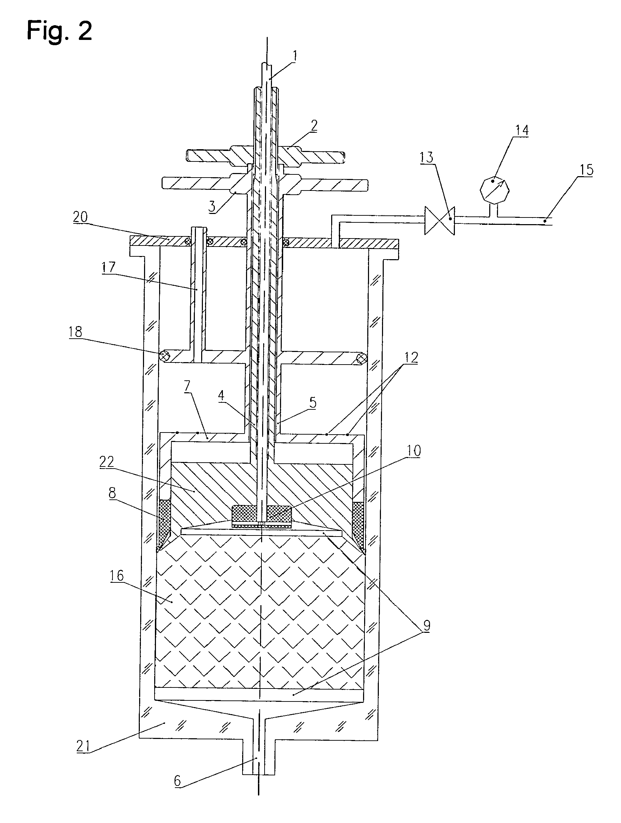

Figure 2 shows a further preferred embodiment of the invention, namely the system that works with gas pressure. It is similar constructed to the system described above in Fig. 1 except the way of getting external force. External force is performed by gas (compressed air) which is distributed to the reactor from the gas-cylinder through a gas inlet 15 and the gas distribution valve 13 and monitored by a manometer 14. The manometer 14 is needed to escape the explosion of the glass reactor in case of excess pressure limits. The volume above the filter holder 22 has a protuberance dividing the volume. A safety tube 17 is located on protuberance and is used to prevent the possibility of gas getting into the reactor volume with the resin (polymer). Between the protuberance and the inner glass 21 wall a sealing 18 is located.

The (gas) volume between the platinum wire 12 and the sealing 18 (upper volume between sorbent/polymer and upper filter) is constant while the volume between the sealing 18 and the upper part 20 of the chamber's cover is variable depending from the gas pressure. In consequence, using gas pressure as "external weight" the upper volume of the glass tube is divided into a two parts chamber of constant volume and chamber of variable volume which filled with gas.

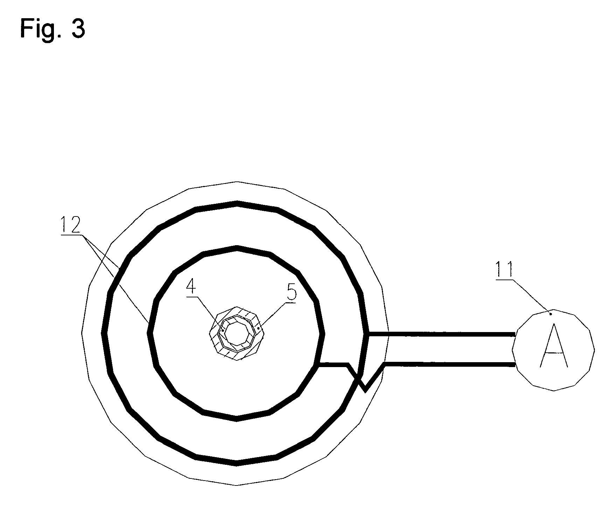

Figure 3 shows a view from the top on the glass tube with the inner and outer tube 4, 5. The detection system for detecting leakages of the system is visible in this view. The presence of any liquid will be detected with by using electrochemistry. In figure 3 there are to platinum rings 12 placed on the top of movable divider 7 which are connected to a detector 11. The detection system works with alternating current and detects changes in capacitance or resistance (depends on the solvent or reagent which is object of detection). Different signals are occurred depending on in case of air, when no leaks are presented, and in case of any solvent.

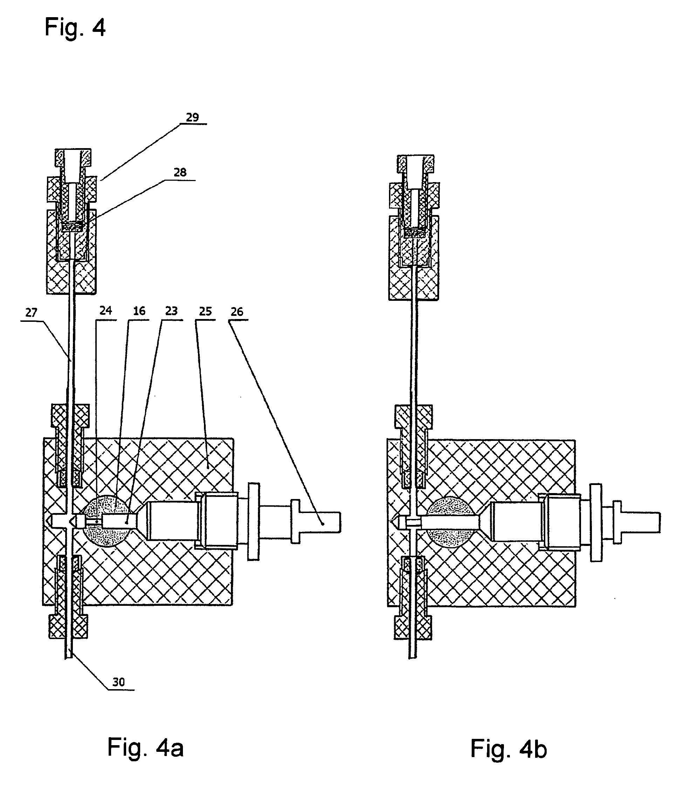

Figures 4a and 4b are sections on the level of the piston 23 viewing from the top. Fig 4a and 4b show the resin sampler with sample obtainer. The piston 23 moves forward and backward when screwing in and out handle 26. It has two positions - when groove 24 on the piston 23 is inside the reactor volume and when the groove is outside between two capillaries 27 and 30. In the first position (Fig 4a) the sample will be obtained, while in the second position (Fig 4b) the sample can be washed out of the reactor straight into the sample obtainer 29 via Teflon capillary 27. The solvent is delivered from the side of capillary 30. Filter 28 in sample obtainer prevents washing out of sample, so you can wash the sample as many times as needed.

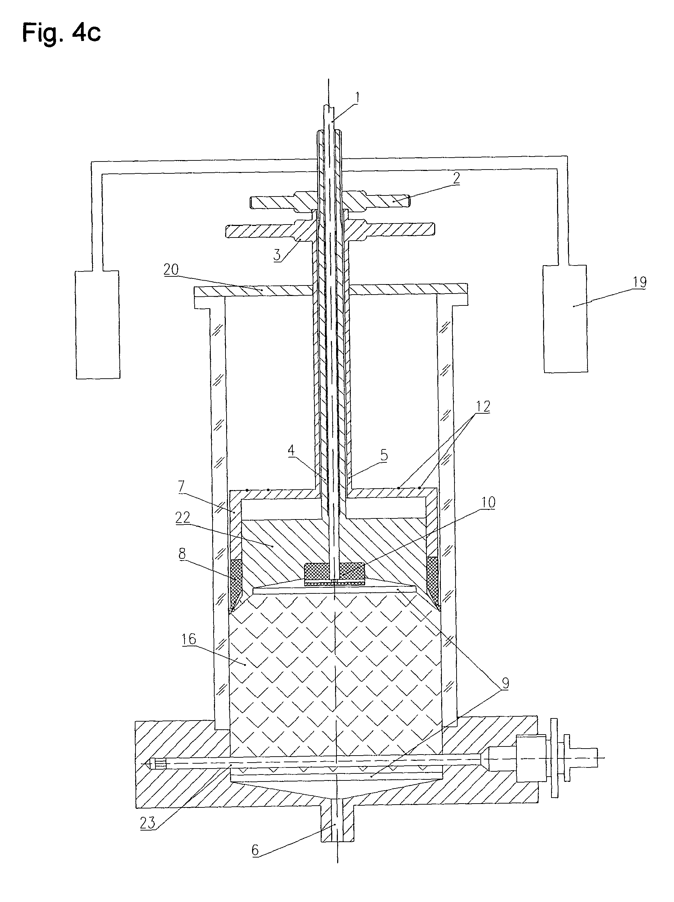

Fig. 4c shows the reactor with sample receiver in more detail. In contrast to figures 4a and 4b, showing clearly the sample obtainer 29 and sample receiver, the inside diameter of the reactor is shown in Fig. 4c in a more extended way to illustrate the real correlations between parts of the reactor.

### Reference numbers

- 1: Capillary
- 2: Nut for inner tube
- 3: Nut for outer tube
- 4: Inner tube
- 5: Outer tube
- 6: Outlet fitting
- 7: Movable divider
- 8: Teflon sealing
- 9: Top and bottom filters
- 10: Distribution plug
- 11: Detector
- 12: Platinum wire
- 13: gas distribution valve
- 14: manometer
- 15: gas inlet
- 16: polymer
- 17: safety tube
- 18: Sealing
- 19: external weight
- 20: chamber's cover
- 21: glass tube
- 22: filter holder
- 23: piston
- 24: groove
- 25: Body of the resin sampler
- 26: handle of the piston
- 27: Capillarity
- 28: filter
- 29: sample obtainer
- 30: Capillarity

## Claims

1. System for the synthesis of biopolymers or performing chromatography using a polymer carrier or sorbent comprising a tube as a reaction column with an outlet fitting at the bottom of the tube that is covered by an outlet filter and a top opening of the glass tube being sealed with a cap through that the stem of a movable divider reaches inside the volume of the glass tube, where the movable divider is build by an outer tube and an inner tube with the inner tube being located in close contact inside the outer tube where the movable divider comprises above the sealing nuts for the inner and outer tube, with nuts that can be screwed against each other and the parts forming the stem of the movable divider being hollow cylinders where inside the stem of the inner tube a capillary is located and both tubes having a bottom part forming a filter holder where the inner tube is barrel-shaped and located inside the outer tube that is formed as a cylinder that is open to the bottom and where a sealing is placed at the bottom of both tubes that is in contact with the inner wall of the glass tube dividing the volume of the glass tube in an upper volume and a reaction volume containing a resin or sorbent and an inlet filter that is placed between the lower end of the capillary and the reaction volume **characterized in that** an external weight is connected with the top of the inner tube and/or a gas is pressed through a gas inlet that is connected by a gas distribution valve with the top sealing cap and means for measuring and controlling gas pressure.

2. System according to claim 1, where the form of the glass tube is cylindrical.

3. System according to claims 1 or 2, **characterized in, that** the tube is made of glass, metal or plastic.

4. System according to any of the preceding claims, **characterized in that** the sealing between glass tube and filter holder is made of Teflon or any other flexible material with chemical resistance against used material.

5. System according to any of the preceding claims, **characterized in that** the external weight is adjustable.

6. System according to any of the preceding claims **characterized in that** in case of using gas pressure the upper volume of the glass tube is divided into a two parts chamber of constant volume and chamber of variable volume filled with gas.

7. System according to claim 5, **characterized in that** the volume between filter holder and pressure volume is connected via a safety tube through the sealing cap with the atmosphere.

8. System according to any of the preceding claims, **characterized in that** a leak detection system is located in the volume directly above the filter holder.

9. System according to claim 7, **characterized in that** the leak detection system comprises a detector placed on top of the filter holder of the movable divider that are connected via means for detecting a change in capacitance or resistance characteristics.

10. System according to any of the preceding claims, **characterized in that** a resin sample is additionally attached.

11. System according to claim 10, **characterized in that** the resin sampler consists of a movable piston with a groove that has one positions where the groove is inside the reaction volume an a second position where the groove is outside the reaction volume and between two capillaries filled with a washing reagent and being connected to a sample obtainer, so that samples can be easily washed inside and used directly for testing.

12. System according to any of the preceding claims, **characterized in that** means for monitoring the position of the movable divider are attached to the reaction column.

13. Use of the system according to any of the preceding claims 1 to 12 for the synthesis of biopolymers.

14. Use of the system according to any of the preceding claims 1 to 12 for cleaning biological, chemical or medical probes.

15. Method for monitoring swellographic changes using a system according to one of the claims 1 to 12.
